# EUROPÄISCHE PATENTSCHRIFT

(11) **EP 2 128 490 B1**
(45) Veröffentlichungstag und Bekanntmachung des Hinweises auf die Patenterteilung: **15.05.2013**
(21) Anmeldenummer: 09100206.3
(22) Anmeldetag: 27.03.2009
(51) Int. Cl.: F16H 21/30

(54) **Exzenter-Planetenantrieb**
Excentric planetary gearing
Excentrique train épicyloidal

(30) Priorität: 27.05.2008 DE 102008002005
(43) Veröffentlichungstag der Anmeldung: 02.12.2009
(73) Patentinhaber: Robert Bosch GmbH, 70442 Stuttgart (DE)
(72) Erfinder: Bauer, Bertram, 76571, Gaggenau (DE)

(56) Entgegenhaltungen:
- EP-A1- 1 445 773
- EP-A2- 0 258 518
- DE-A1- 4 131 773
- DE-B- 1 051 595
- FR-A- 600 158

## Beschreibung

### Stand der Technik

Die vorliegende Erfindung betrifft ein Planetengetriebe, welches in der Lage ist, aus einer Drehbewegung eine Linearbewegung zu erzeugen.

Planetengetriebe sind aus dem Stand der Technik in unterschiedlichen Ausgestaltungen bekannt. Planetengetriebe umfassen üblicherweise ein Sonnenrad, ein Hohlrad und mehrere mit dem Sonnenrad und dem Hohlrad kämmende Planetenräder. Die Planetenräder werden mittels eines Planetenradträgers gehalten. Ferner ist es bekannt, beispielsweise mittels eines Exzenters eine Rotationsbewegung in eine Linearbewegung umzuwandeln. Dies wird beispielsweise durch eine Verwendung von einer Pleuelstange realisiert. Ferner ist aus der DE 10 51 595 A ein Planetengetriebe gemäß dem Oberbegriff des Anspruches 1 bekannt.

### Vorteile der Erfindung

Das erfindungsgemäße Planetengetriebe mit den Merkmalen des Patentanspruchs 1 weist demgegenüber den Vorteil auf, dass es in der Lage ist, eine Rotationsbewegung in eine Linearbewegung umzuwandeln. Hierzu umfasst das erfindungsgemäße Planetengetriebe ein Sonnenrad, ein Hohlrad und wenigstens ein erstes und zweites Planetenrad. Dabei weist das erste Planetenrad einen unterschiedlichen Teilkreisdurchmesser auf als das zweite Planetenrad. Durch die Verwendung von zwei Planetenrädern unterschiedlicher Größe, welche dementsprechend auch unterschiedliche Zähnezahlen aufweisen, ist es möglich, dass das Planetengetriebe eine Rotationsbewegung in eine Linearbewegung wandelt. Hierbei führt das Sonnenrad oder das Hohlrad oder ein Planetenradträger eine Exzenterbewegung aus. Hierdurch können die Vorteile des Planetengetriebes, wie insbesondere ein kompakter Aufbau und eine Exzenterbewegung kombiniert werden. Insbesondere kann mittels des Planetengetriebes eine große Übersetzung realisiert werden, was sowohl zur Drehzahlübersetzung bzw. Drehzahluntersetzung als auch zur Kraftübersetzung bzw. Kraftuntersetzung verwendet werden kann. Auch kann beispielsweise eine exakte Länge einer Linearbewegung durch das Planetengetriebe definiert werden. Weiter umfasst das Hohlrad einen länglichen, radial nach außen gerichteten Fortsatz. An diesem Fortsatz ist vorzugsweise ein linear bewegliches Element, beispielsweise ein Kolbenelement, angeordnet. Weiter sind entlang eines Außenumfangs des Hohlrads eine Vielzahl von radial nach außen verlaufenden Fortsätzen vorgesehen. Hierdurch ist es möglich, dass zu jedem der radial nach außen verlaufenden Fortsätze eine Linearbewegung realisiert wird, so dass das Planetengetriebe beispielsweise ähnlich wie ein Sternmotor zur Bereitstellung von Linearbewegungen verwendet werden kann.

Weiter ist dabei in den radial nach außen verlaufenden Fortsätzen jeweils eine Öffnung zur Befestigung eines linear bewegbaren Elements vorgesehen.

Die Unteransprüche zeigen bevorzugte Weiterbildungen der Erfindung.

Das Planetengetriebe umfasst vorzugsweise drei Planetenräder, welche um das Sonnenrad herum angeordnet sind, wobei zwei der Planetenräder gleiche Teilkreisdurchmesser aufweisen und das andere Planetenrad einen unterschiedlichen Teilkreisdurchmesser aufweist. Vorzugsweise weist das erste Planetenrad einen größeren, insbesondere doppelt so großen, Teilkreisdurchmesser wie die beiden anderen Planetenräder auf.

Weiter bevorzugt ist eine Zähnezahl der Planetenräder mit gleichem Teilkreisdurchmesser halb so groß wie eine Zähnezahl des größeren Planetenrades.

Weiter bevorzugt ist ein Teilkreisdurchmesser des Sonnenrads gleich groß wie die Teilkreisdurchmesser der beiden gleich großen Planetenräder. Hierbei weisen demnach das Sonnenrad und die beiden gleich großen Planetenräder die gleiche Zähnezahl auf.

Gemäß einer weiter bevorzugten Ausgestaltung der Erfindung ist ein Planetenradträger, an welchem die Planetenträger gelagert sind, exzentrisch zum Sonnenrad gelagert.

Besonders bevorzugt ist der Planetenradträger dabei exzentrisch auf einer Sonnenradwelle des Sonnenrads abgestützt.

Vorzugsweise ist das Hohlrad nicht rotierbar gehalten, jedoch ist das Hohlrad dabei trotzdem beweglich um einen sich linear bewegenden Lagerpunkt angeordnet, so dass es eine Exzenterbewegung ausführt.

Das Sonnenrad ist vorzugsweise als Antriebsrad ausgebildet. Weiter bevorzugt ist das Sonnenrad ortsfest angeordnet und ein Abtrieb erfolgt vorzugsweise über das Hohlrad.

Ferner betrifft die Erfindung eine Getriebeanordnung mit einem Exzenter-Planetengetriebe und einem linear beweglichen Element, insbesondere einen Kolben, welcher am Planetengetriebe angeordnet ist.

### Zeichnung

Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische, perspektivische Ansicht eines Planetengetriebes gemäß einem Ausführungsbeispiel der Erfindung,
- Figur 2: eine schematische Draufsicht des Planetengetriebes in einer ersten Position,
- Figur 3: eine schematische Draufsicht des Planetengetriebes in einer zweiten Position,
- Figur 4: eine schematische Draufsicht des Planetengetriebes in einer dritten Position, und
- Figur 5: eine schematische Draufsicht des Planetengetriebes in einer vierten Position.

### Bevorzugte Ausführungsform der Erfindung

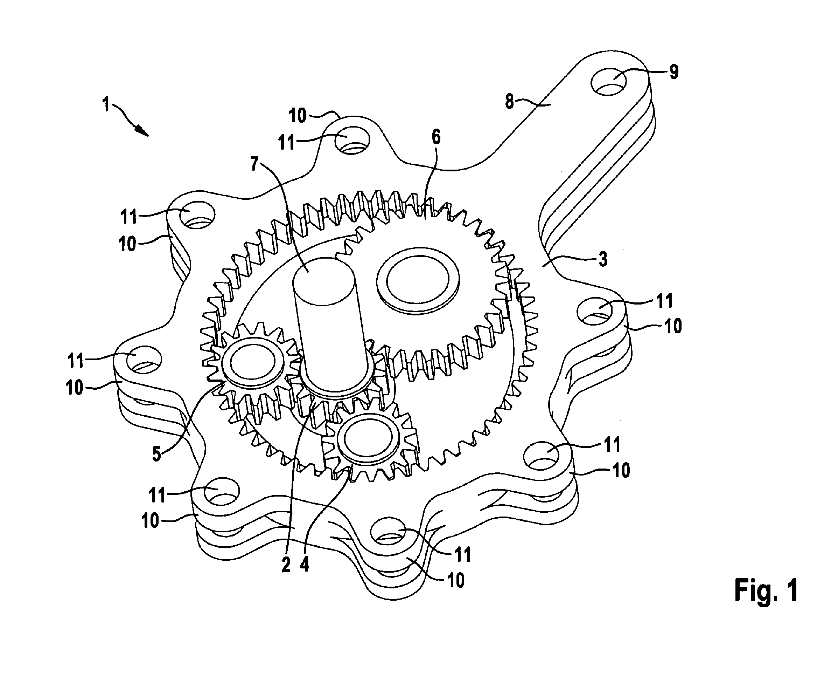

Nachfolgend wird unter Bezugnahme auf die Figuren 1 bis 5 ein Planetengetriebe 1 gemäß einem bevorzugten Ausführungsbeispiel der Erfindung im Detail beschrieben.

Wie insbesondere aus Figur 1 ersichtlich ist, umfasst das Planetengetriebe 1 ein Sonnenrad 2, welches auf einer drehbar gelagerten Sonnenradwelle 7 angeordnet ist, ein Hohlrad 3 und drei Planetenräder. Genauer umfasst das Planetengetriebe ein erstes Planetenrad 6, ein zweites Planetenrad 4 und ein drittes Planetenrad 5. Wie aus Figur 1 ersichtlich ist, ist ein Teilkreisdurchmesser des zweiten Planetenrades 4 gleich einem Teilkreisdurchmesser des dritten Planetenrades 5. Ferner ist ein Teilkreisdurchmesser des ersten Planetenrades 6 größer als die Teilkreisdurchmesser des zweiten und dritten Planetenrades 4, 5.

Das Planetenradgetriebe dieses Ausführungsbeispiels ist dabei derart ausgelegt, dass eine Zähnezahl des zweiten Planetenrades 4 gleich einer Zähnezahl des dritten Planetenrades 5 und gleich einer Zähnezahl des Sonnenrads 2 ist. In diesem Ausführungsbeispiel beträgt die Zähnezahl von zweitem und drittem Planetenrad sowie Sonnenrad jeweils 15. Das erste Planetenrad 6 weist 30 Zähne auf. Das Hohlrad 3 weist 57 Zähne auf. Somit ist eine Auslegung des Planetengetriebes derart, dass die Zähnezahl von zweitem Planetenrad 4, drittem Planetenrad 5 und Sonnenrad 2 gleich ist und die Zähnezahl des ersten Planetenrades 6 doppelt so groß wie die des Sonnenrads bzw. des zweiten und dritten Planetenrades ist. Weiter ist auch ein Teilkreisdurchmesser des ersten Planetenrades 6 doppelt so groß wie die Teilkreisdurchmesser des zweiten und dritten Planetenrades 4, 5.

Wie weiter aus Figur 1 ersichtlich ist, umfasst das Hohlrad 3 einen länglichen, radial nach außen gerichteten Fortsatz 8, an welchem eine Öffnung 9 angeordnet ist. Ferner umfasst das Hohlrad eine Vielzahl von kurzen, radial nach außen gerichteten Fortsätzen 10, welche jeweils Öffnungen 11 aufweisen. In diesem Ausführungsbeispiel sind sieben kurze, radial nach außen gerichtete Fortsätze 10 am Hohlrad vorgesehen. Die Öffnungen 9 bzw. 11 dienen dabei dazu, ein zusätzliches, linear bewegbares Element zu fixieren.

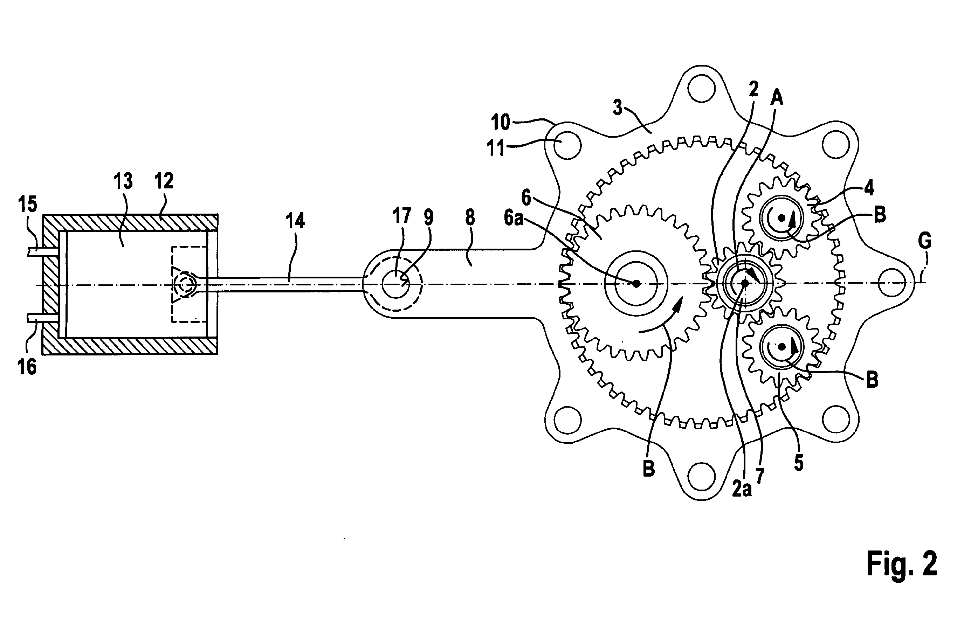

In den Figuren 2 bis 5 ist ein derartiges zusätzliches linear bewegbares Element in Form eines Kolbens 13 am Fortsatz 8 befestigt. Hierzu ist der Kolben 13 mit einer Pleuelstange 14 verbunden, welche mittels eines Bolzens 17 in der Öffnung 9 am Fortsatz 8 fixiert ist. Der Kolben 13 ist in einem Zylinder 12 geführt, wobei am Boden des Zylinders 12 ein Einlassanschluss 15 und ein Auslassanschluss 16 vorgesehen ist.

Wie aus Figur 1 ersichtlich ist, ist das Hohlrad 3 mit einer gewissen Dicke ausgebildet, wobei eine Innenverzahnung des Hohlrads 3 nicht über die gesamte Dicke des Hohlrads verläuft. Ferner sind an jedem der Fortsätze 8 bzw. 10 jeweils zwei ösenartige Öffnungen 9 bzw. 11 vorgesehen, welche jeweils übereinander liegen. Zwischen den beiden ösenartigen Öffnungen kann auf einfache Weise eine Pleuelstange fixiert werden.

Das Planetengetriebe 1 des erfindungsgemäßen Ausführungsbeispiels ist dabei derart ausgelegt, dass das Sonnenrad 2 ortsfest angeordnet ist. Die drei Planetenräder 4, 5, 6 sind um das Sonnenrad 2 herum angeordnet und ein Planetenradträger ist exzentrisch zum Sonnenrad gelagert. Zur besseren Übersichtlichkeit ist der Planetenradträger in den Figuren nicht dargestellt, dieser kann jedoch wie üblich ausgebildet, beispielsweise als Ringelement vorgesehen sein, welches die Wellen der Planetenräder 4, 5, 6, auf welchen die Planetenräder drehbar gelagert sind, miteinander verbindet. Der Planetenradträger ist dabei vorzugsweise auf der Sonnenradwelle 7 gelagert, so dass ein besonders kompakter Aufbau erhalten wird. Ein Antrieb des Planetengetriebes erfolgt dabei über das ortsfeste Sonnenrad 2.

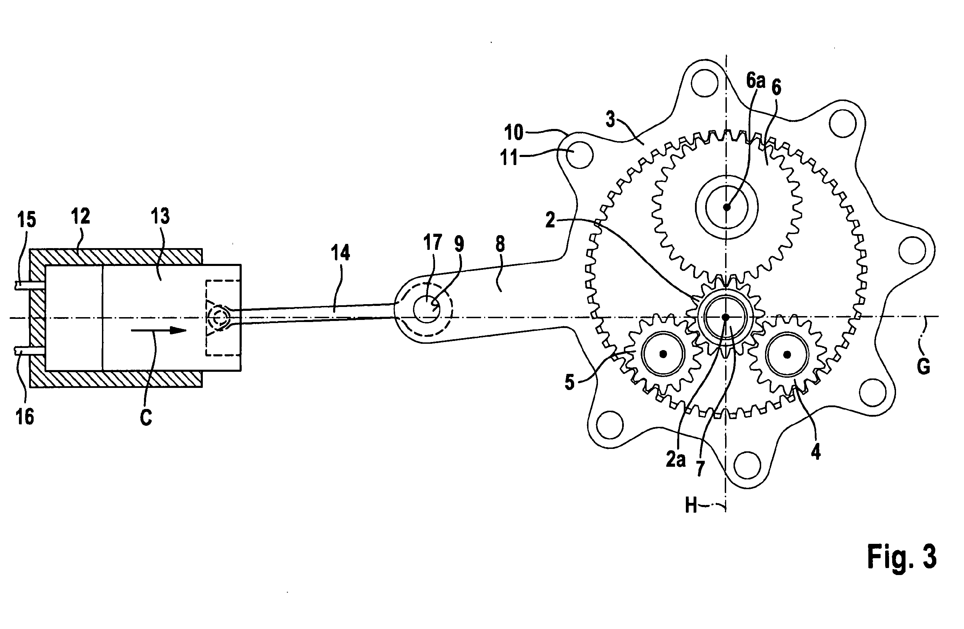

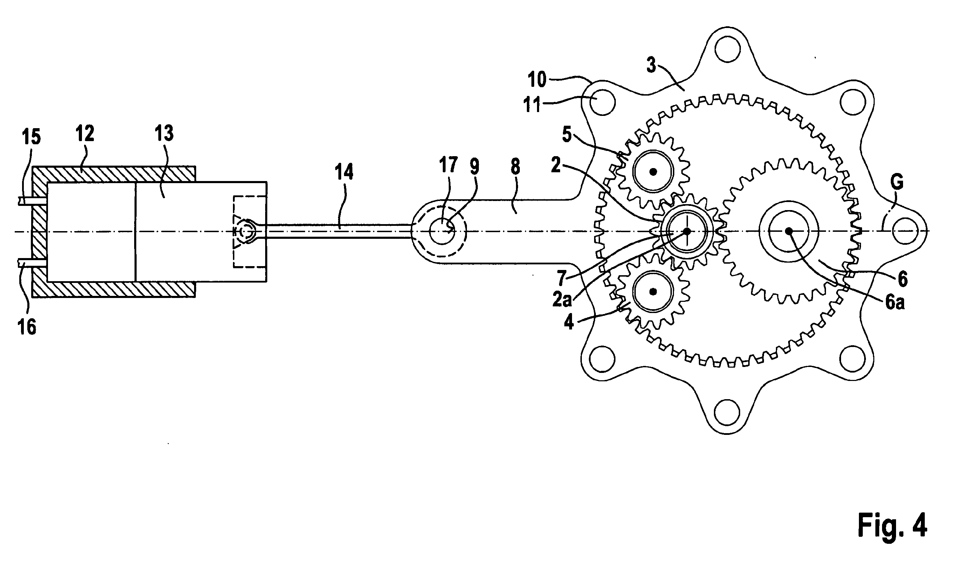

Die Funktion des erfindungsgemäßen Planetengetriebes 1 ist in den Figuren 2 bis 5 dargestellt. Wie aus Figur 2 ersichtlich ist, befindet sich das Planetengetriebe 1 dabei in einer Ausgangsposition. In dieser Position befindet sich der Kolben 13 an einem oberen Totpunkt im Zylinder 12. In der Ausgangsposition befindet sich eine Mittelachse 6a des ersten Planetenrades 6 auf einer gemeinsamen Geraden G mit einer Mittelachse 7a des Sonnenrads 7 und auch die Pleuelstange 14 liegt auf der Geraden G. Die Gerade G bildet auch eine Mittelachse des Zylinders 12. Wenn nun das Sonnenrad 2 in Richtung des Pfeils A angetrieben wird, drehen sich die drei Planetenräder 4, 5, 6 jeweils in Richtung des Pfeils B. Aufgrund der unterschiedlichen Größen der Planetenräder erfolgt eine Verschiebung des Hohlrads 3, da das Hohlrad 3 lediglich über die Pleuelstange 14 und den Kolben 13 im Zylinder 12 geführt ist und über die Planetenräder 4, 5, 6 abgestützt ist. Der Kolben 13 ist im Zylinder 12 linear geführt. Die Führung des Kolbens 13 im Zylinder 12 bewirkt, dass das Hohlrad 3 nicht ortsfest angeordnet ist, sondern entsprechend dem Durchmesser des dritten Planetenrades 6 eine exzentrische Bewegung entsprechend einem Pleuel einer Pleuelstange ausführt. Mit anderen Worten führt das Hohlrad 3 eine Exzenterbewegung aus. Figur 3 zeigt einen Zwischenzustand des Planetengetriebes auf dem Weg des Kolbens vom oberen Totpunkt zum unteren Totpunkt. Figur 4 zeigt die Position des Planetengetriebes, wenn der Kolben 13 sich am unteren Totpunkt befindet. Bei der in Figur 3 gezeigten Position ist eine Gerade H zwischen dem Mittelpunkt 6a des dritten Planetenrades 6 und dem Mittelpunkt 2a des Sonnenrads 7 in einem Winkel von 90° zur Geraden G.

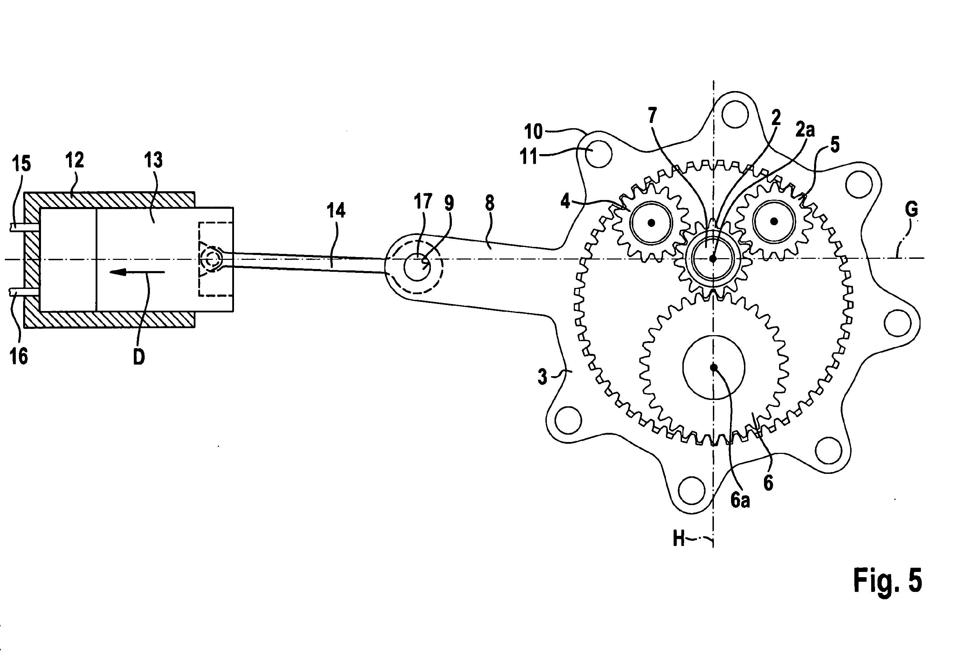

Bei der in Figur 4 gezeigten Stellung des Planetengetriebes 1 befindet sich der Mittelpunkt 6a des ersten Planetenrades 6 und der Mittelpunkt 2a des Sonnenrades 2 wieder auf der gemeinsamen Geraden G, wobei das erste Planetenrad 6 um das ortsfeste Sonnenrad 2 herumgelaufen ist. Somit hat bei der in Figur 4 gezeigten Stellung der Kolben 13 eine maximale lineare Bewegung ausgeführt. Figur 5 zeigt wieder eine Stellung des Planetengetriebes, in welchem eine Gerade H durch eine Mittelachse 2a des Sonnenrads 2 und eine Mittelachse 6a des ersten Planetenrads 6 wieder um 90° zur Geraden G ist, wobei das erste Planetenrad 6 dabei unterhalb der Geraden, d.h. in einer zur Figur 3 entgegengesetzten Position, angeordnet ist. Der Kolben 13 befindet sich dabei wieder auf seinem Rückweg vom unteren Totpunkt zum oberen Totpunkt, wie durch den Pfeil D angedeutet.

Somit kann das erfindungsgemäße Exzenter-Planetengetriebe 1 eine Rotationsbewegung in eine Linearbewegung umwandeln, welche am Fortsatz 8 abgreifbar ist. Hierbei sei angemerkt, dass die Linearbewegung auch an allen anderen Umfangspositionen des Hohlrads 3, beispielsweise den weiteren Fortsätzen 10, abgreifbar ist. Insbesondere kann mittels des erfindungsgemäßen Planetengetriebes beispielsweise auch eine Anordnung in Form eines Sternmotors mit mehreren an verschiedenen Umfangspositionen angeordneten Kolben ermöglicht werden. Dadurch kann beispielsweise ein sternförmig aufgebauter Verdichter realisiert werden. Dabei können insbesondere alle Vorteile eines Planetengetriebes, insbesondere ein geringer Bauraum und eine relativ große Übersetzung bzw. Untersetzung realisiert werden. Die exzentrische Lagerung der Mittelpunkte der Planetenräder 4, 5, 6 relativ zum Sonnenrad 2 ermöglichst somit eine exzentrische Bewegung des Hohlrades 3, welche dann, beispielsweise mittels eines Kolbens, in eine Linearbewegung umgewandelt werden kann. Hierbei sei angemerkt, dass dies nicht notwendigerweise mit einem Kolben, sondern auch beispielsweise durch zwei Führungselemente, welche den Fortsatz 8 zwischen sich führen, realisiert werden kann.

Weiterhin sei angemerkt, dass es auch möglich ist, z.B. den Planetenradträger ortsfest zu halten oder das Hohlrad ortsfest zu halten und die exzentrische Bewegung an einem der beiden anderen Bauteile des Planetenradträgers abzunehmen. Ferner sei angemerkt, dass bei einer entsprechend großen Übersetzung auch eine Selbsthemmung des Planetengetriebes möglich ist.

Das erfindungsgemäße Exzenter-Planetengetriebe 1 kann beispielsweise bei einem nach dem Prinzip des Sternmotors aufgebauten Kompressor verwendet werden, wobei hier ein Kompressor bereitgestellt werden könnte, welcher bei einem relativ langsamen Lauf, aber durch die mögliche große Anzahl der Zylinder sehr großvolumigen Bauweise erhalten werden kann. Weiter kann das erfindungsgemäße Planetengetriebe beispielsweise bei einer Sitzhöhenverstellung in einem Kraftfahrzeug angewandt werden, wobei bei der Sitzhöhenverstellung insbesondere eine große Kraft bei einem geringen Weg notwendig ist.

## Patentansprüche

1. Planetengetriebe, umfassend ein Sonnenrad (2), ein Hohlrad (3) und wenigstens ein erstes Planetenrad (6) und ein zweites Planetenrad (4), wobei das erste Planetenrad (6) einen Teilkreisdurchmesser aufweist, welcher größer ist als ein Teilkreisdurchmesser des zweiten Planetenrades (4), und wobei das Hohlrad (3) einen länglichen, radial nach außen gerichteten Fortsatz (8) umfasst, **dadurch gekennzeichnet, dass** entlang eines Außenumfangs des Hohlrads eine Vielzahl von radial nach außen verlaufenden Fortsätzen (8, 10) angeordnet sind, und dass an den radial nach außen gerichteten Fortsätzen (8, 10) jeweils eine Öffnung (9, 11) zur Befestigung eines linear bewegbaren Elements, insbesondere eines Kolbenelements (13), vorgesehen ist.

2. Planetengetriebe nach Anspruch 1, **dadurch gekennzeichnet, dass** das Planetengetriebe das erste Planetenrad (6), das zweite Planetenrad (4) und ein drittes Planetenrad (5) umfasst, welche um das Sonnenrad (2) herum angeordnet sind, wobei das zweite und dritte Planetenrad (4, 5) einen gleichen Teilkreisdurchmesser aufweisen und das erste Planetenrad (6) einen größeren Teilkreisdurchmesser aufweist.

3. Planetengetriebe nach Anspruch 2, **dadurch gekennzeichnet, dass** das zweite Planetenrad (4) und das dritte Planetenrad (5) eine gleiche Zähnezahl aufweisen.

4. Planetengetriebe nach Anspruch 2 oder 3, **dadurch gekennzeichnet, dass** eine Zähnezahl des ersten Planetenrades (6) doppelt so groß wie eine Zähnezahl des zweiten Planetenrades (4) ist.

5. Planetengetriebe nach einem der vorhergehenden Ansprüche, **dadurch gekennzeichnet, dass** ein Teilkreisdurchmesser des Sonnenrades (2) gleich ist wie ein Teilkreisdurchmesser des zweiten Planetenrades (4).

6. Planetengetriebe nach einem der vorhergehenden Ansprüche, **dadurch gekennzeichnet, dass** die Planetenräder an einem Planetenradträger gelagert sind und der Planetenradträger exzentrisch zum Sonnenrad (2) angeordnet ist.

7. Planetengetriebe nach Anspruch 6, **dadurch gekennzeichnet, dass** der Planetenradträger auf einer Sonnenradwelle (7) des Sonnenrades abgestützt ist.

8. Planetengetriebe nach einem der vorhergehenden Ansprüche, **dadurch gekennzeichnet, dass** das Sonnenrad (2) als Antriebsrad des Planetengetriebes ausgebildet ist.

9. Planetengetriebe nach einem der vorhergehenden Ansprüche, **dadurch gekennzeichnet, dass** das Sonnenrad (2) ortsfest angeordnet ist.

10. Getriebeanordnung, umfassend ein Planetengetriebe (1) nach einem der vorhergehenden Ansprüche und ein linear bewegliches Element (13), welches am Planetengetriebe (1) angeordnet ist.

## Claims

1. Planetary gearing, comprising a sun wheel (2), a ring wheel (3) and at least one first planet wheel (6) and one second planet wheel (4), the first planet wheel (6) having a reference diameter which is larger than a reference diameter of the second planet wheel (4), and the ring wheel (3) comprising an elongate extension (8) directed radially outwards, **characterized in that** a multiplicity of extensions (8, 10) running radially outwards are arranged along an outer circumference of the ring wheel, and **in that** in each case an orifice (9, 11) for fastening a linearly movable element, in particular a piston element (13), is provided on the extensions (8, 10) directed radially outwards.

2. Planetary gearing according to Claim 1, **characterized in that** the planetary gearing comprises the first planet wheel (6), the second planet wheel (4) and a third planet wheel (5) which are arranged around the sun wheel (2), the second and the third planet wheel (4, 5) having an identical reference diameter, and the first planet wheel (6) having a larger reference diameter.

3. Planetary gearing according to Claim 2, **characterized in that** the second planet wheel (4) and the third planet wheel (5) have the same number of teeth.

4. Planetary gearing according to Claim 2 or 3, **characterized in that** a number of teeth of the first planet wheel (6) is twice as large as a number of teeth of the second planet wheel (4).

5. Planetary gearing according to one of the preceding claims, **characterized in that** a reference diameter of the sun wheel (2) is the same as a reference diameter of the second planet wheel (4).

6. Planetary gearing according to one of the preceding claims, **characterized in that** the planet wheels are mounted on a planet-wheel carrier, and the planet-wheel carrier is arranged eccentrically with respect to the sun wheel (2).

7. Planetary gearing according to Claim 6, **characterized in that** the planet-wheel carrier is supported on a sun-wheel shaft (7) of the sun wheel.

8. Planetary gearing according to one of the preceding claims, **characterized in that** the sun wheel (2) is designed as the driving wheel of the planetary gearing.

9. Planetary gearing according to one of the preceding claims, **characterized in that** the sun wheel (2) is arranged fixedly.

10. Gearing arrangement, comprising a planetary gearing (1) according to one of the preceding claims, and a linearly movable element (13) which is arranged on the planetary gearing (1).

## Revendications

1. Engrenage planétaire, comprenant une roue solaire (2), une couronne dentée (3) et au moins un premier pignon satellite (6) et un deuxième pignon satellite (4), le premier pignon satellite (6) présentant un diamètre de cercle partiel qui est supérieur à un diamètre de cercle partiel du deuxième pignon satellite (4), et la couronne dentée (3) comprenant une saillie (8) allongée, orientée radialement vers l'extérieur, **caractérisé en ce que** le long d'une périphérie extérieure de la couronne dentée est disposée une pluralité de saillies (8, 10) s'étendant radialement vers l'extérieur, et **en ce qu'**au niveau des saillies (8, 10) s'étendant radialement vers l'extérieur est prévue à chaque fois une ouverture (9, 11) pour la fixation d'un élément déplaçable linéairement, notamment d'un élément de piston (13).

2. Engrenage planétaire selon la revendication 1, **caractérisé en ce que** l'engrenage planétaire comprend le premier pignon satellite (6), le deuxième pignon satellite (4) et un troisième pignon satellite (5), lesquels sont disposés autour de la roue solaire (2), le deuxième et le troisième pignon satellite (4, 5) présentant un diamètre de cercle partiel identique et le premier pignon satellite (6) présentant un diamètre de cercle partiel plus grand.

3. Engrenage planétaire selon la revendication 2, **caractérisé en ce que** le deuxième pignon satellite (4) et le troisième pignon satellite (5) présentent un nombre de dents identique.

4. Engrenage planétaire selon la revendication 2 ou 3, **caractérisé en ce qu'**un nombre de dents du premier pignon satellite (6) est deux fois plus grand que le nombre de dents du deuxième pignon satellite (4).

5. Engrenage planétaire selon l'une quelconque des revendications précédentes, **caractérisé en ce qu'**un diamètre de cercle partiel de la roue solaire (2) est identique à un diamètre de cercle partiel du deuxième pignon satellite (4).

6. Engrenage planétaire selon l'une quelconque des revendications précédentes, **caractérisé en ce que** les pignons satellites sont montés sur un porte-satellites et le porte-satellites est disposé de manière excentrique par rapport à la roue solaire (2).

7. Engrenage planétaire selon la revendication 6, **caractérisé en ce que** le porte-satellites est supporté sur un arbre de roue solaire (7) de la roue solaire.

8. Engrenage planétaire selon l'une quelconque des revendications précédentes, **caractérisé en ce que** la roue solaire (2) est réalisée sous forme de roue d'entraînement de l'engrenage planétaire.

9. Engrenage planétaire selon l'une quelconque des revendications précédentes, **caractérisé en ce que** la roue solaire (2) est disposée de manière fixe.

10. Agencement d'engrenage comprenant un engrenage planétaire (1) selon l'une quelconque des revendications précédentes et un élément déplaçable linéairement (13), qui est disposé sur l'engrenage planétaire (1).
